Europäisches Patentamt

European Patent Office

Office européen des brevets

(19)

(11) **EP 1 275 096 B1**

(12) **FASCICULE DE BREVET EUROPEEN**

(45) Date de publication et mention
de la délivrance du brevet:
**05.10.2005 Bulletin 2005/40**

(51) Int Cl.⁷: **G08G 1/0962**

(21) Numéro de dépôt: **02718251.8**

(86) Numéro de dépôt international:
**PCT/FR2002/000828**

(22) Date de dépôt: **07.03.2002**

(87) Numéro de publication internationale:
**WO 2002/071363 (12.09.2002 Gazette 2002/37)**

(54) **DISPOSITIF DE DETECTION D'UNE SURFACE DE ROULEMENT ET VEHICULE UTILISANT UN TEL DISPOSITIF**

VORRICHTUNG ZUR ERFASSUNG DER STRASSENOBERFLÄCHE UND FAHRZEUG MIT EINER DERARTIGEN VORRICHTUNG

DEVICE FOR DETECTING A RUNNING SURFACE AND VEHICLE USING SAME

(84) Etats contractants désignés:
**AT BE CH CY DE DK ES FI FR GB GR IE IT LI LU MC NL PT SE TR**

(30) Priorité: **08.03.2001 FR 0103162**

(43) Date de publication de la demande:
**15.01.2003 Bulletin 2003/03**

(73) Titulaire: **Peugeot Citroen Automobiles SA
92200 Neuilly sur Seine (FR)**

(72) Inventeur: **RIAT, Jean-Christophe
F-95870 Bezons (FR)**

(74) Mandataire: **De Cuenca, Emmanuel Jaime
PSA Peugeot Citroen
Propriété Industrielle
DTAT/MPG/BPI - Service Brevets
18, rue des Fauvelles
92250 La Garenne Colombes (FR)**

(56) Documents cités:
EP-A- 0 049 722          EP-A- 0 451 117
EP-A- 0 960 775          FR-A- 2 759 647
US-A- 5 225 827          US-A- 5 982 278

**Description**

L'invention se rapporte à un dispositif de détection d'une surface de roulement pour véhicule ainsi qu'à un véhicule utilisant un tel dispositif de détection.

L'invention concerne plus particulièrement un dispositif de détection comportant une pluralité de capteurs destinés à être orientés vers une surface de roulement pour déterminer des modifications de cette dernière, ainsi que des moyens de traitement de données des informations relevées par les capteurs.

Le document EP860001 décrit un tel dispositif de détection appliqué à un véhicule et utilisant des capteurs infra-rouge en vue de signaler à l'utilisateur du véhicule un éventuel changement de surface de roulement ou le franchissement d'une ligne de marquage au sol.

Ce type de dispositif présente un fonctionnement global satisfaisant, cependant, dans certains cas, il ne permet pas de détecter avec une qualité suffisante toutes les modifications de la surface de roulement.

Un but de la présente invention est de proposer un dispositif de détection d'une surface de roulement ayant une qualité de détection améliorée par rapport à l'art antérieur, tout en présentant une structure simple et peu coûteuse.

A cette fin, le dispositif selon l'invention, par ailleurs conforme à la définition générique qu'en donne le préambule ci-dessus, est essentiellement caractérisé en ce que les capteurs sont disposés relativement de façon à associer au moins une partie de leur points de visée au sol en paires, les deux points de visée au sol d'une paire étant espacés d'une première distance déterminée, et en ce que les distances transversales séparant deux paires adjacentes de points de visée au sol sont croissantes en direction d'un axe longitudinal selon une direction sensiblement perpendiculaire à cet axe.

Par ailleurs, l'invention peut comporter l'une ou plusieurs des caractéristiques suivantes :

- le dispositif comporte au moins deux paires de capteurs,
- les capteurs sont disposés de part et d'autre d'un axe longitudinal médian, les distances transversales séparant les paires de points de visée au sol de capteurs sont sensiblement symétriques par rapport à l'axe longitudinal médian,
- la distance dn transversale en cm séparant deux paires adjacentes de points de visée au sol de capteurs est donnée par la formule dn = (L2+e).$(\frac{E+L1}{E+2c})^n$, de façon à détecter

notamment une ligne de marquage au soi discontinue, et dans laquelle n est le numéro d'ordre de la paire de points de visée au sol en direction de l'axe, L1 la longueur en cm d'un tiret de la ligne discontinue, L2 la largeur en cm d'un tiret de la ligne discontinue, E la distance en cm séparant deux tirets consécutifs, e la distance en cm séparant deux points de visée au sol d'une même paire, et c une constante déterminée en cm définissant une marge de sécurité de détection.

Un autre but de l'invention est de proposer un véhicule utilisant un tel dispositif, palliant tout ou partie des inconvénients de l'art antérieur.

A cette fin, le véhicule selon l'invention comporte un dispositif de détection comme décrit ci-dessus, les distances transversales séparant deux paires adjacentes de points de visée au sol étant croissantes de l'extérieur vers l'intérieur du véhicule selon une direction sensiblement perpendiculaire à l'axe longitudinal du véhicule.

Par ailleurs, le véhicule peut comporter l'une ou plusieurs des caractéristiques suivantes :

- les capteurs sont disposées de part et d'autre de l'axe longitudinal médian du véhicule, les distances transversales séparant les paires de points de visée au sol sont sensiblement symétriques par rapport à l'axe longitudinal médian,

- les distances dn transversales en cm séparant deux paires adjacentes de points de visée au sol sont données par la formule dn = (L2+e).$(\frac{E+L1}{E+2c})^n$, de façon à détecter

notamment une ligne de marquage au sol discontinue, et dans laquelle n est le numéro d'ordre de la paire de points de visée au sol en direction de l'axe longitudinal, L1 la longueur en cm d'un tiret de la ligne discontinue, L2 la largeur en cm d'un tiret de la ligne discontinue, E la distance en cm séparant deux tirets consécutifs, e la distance en cm séparant deux capteurs d'une même paire de points de visée au sol, et c une constante déterminée en cm définissant une marge de sécurité de détection,

- au moins une partie des capteurs sont inclinés par rapport à la verticale avec un angle sensiblement égal ou supérieur à leur demi-angle de cône de vision,

- au moins une partie des capteurs sont inclinés par rapport à la verticale avec un angle compris entre 5 et 45 degrés environ,

- au moins une partie des capteurs sont disposés dans le bouclier avant du véhicule,

- le véhicule comporte sept paires de capteurs,

- la distance séparant les deux points de visée au sol d'une même paire est comprise entre 5 et 25cm environ.

D'autres particularités et avantages apparaîtront à la lecture de la description ci-après, faite en référence aux figures dans lesquelles :

- la figure 1 représente une vue schématique de dessus d'un véhicule sur une route,

- la figure 2 représente une vue schématique et partielle de l'avant d'un véhicule, illustrant un premier agencement de capteurs de détection selon l'invention,

- la figure 3 représente schématiquement la structure d'une paire de capteurs de détection selon l'invention,

- la figure 4 représente de manière synoptique la structure et de fonctionnement du dispositif de détection conforme à un mode de réalisation préféré de l'invention.

- la figure 5 représente une vue schématique et partielle de l'avant d'un véhicule, illustrant la répartition des points de visée au sol d'un second agencement de capteurs selon l'invention,

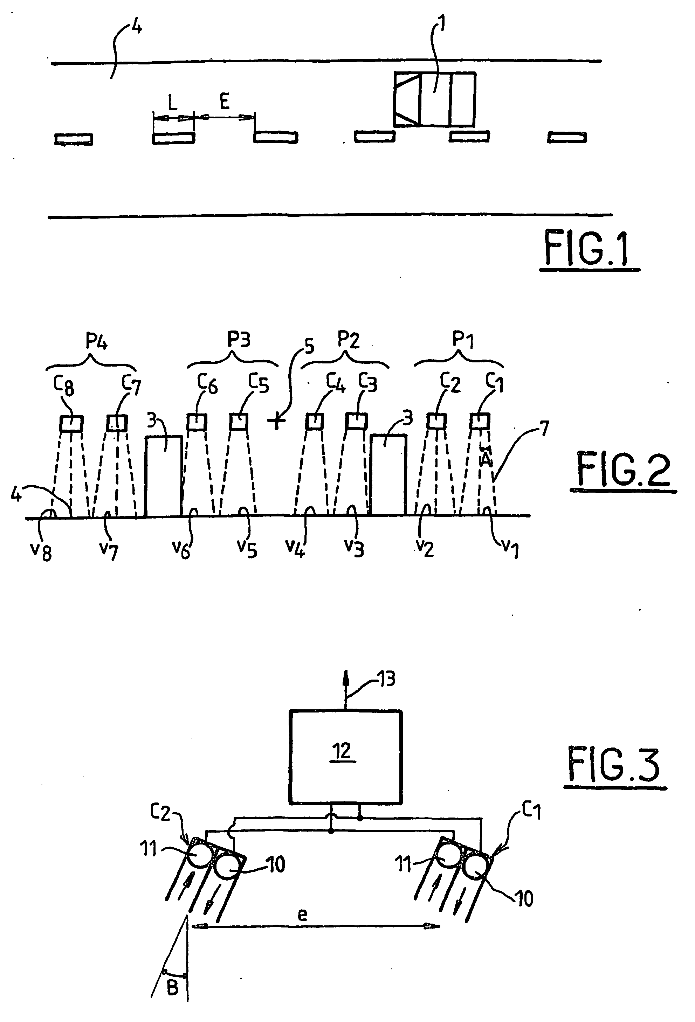

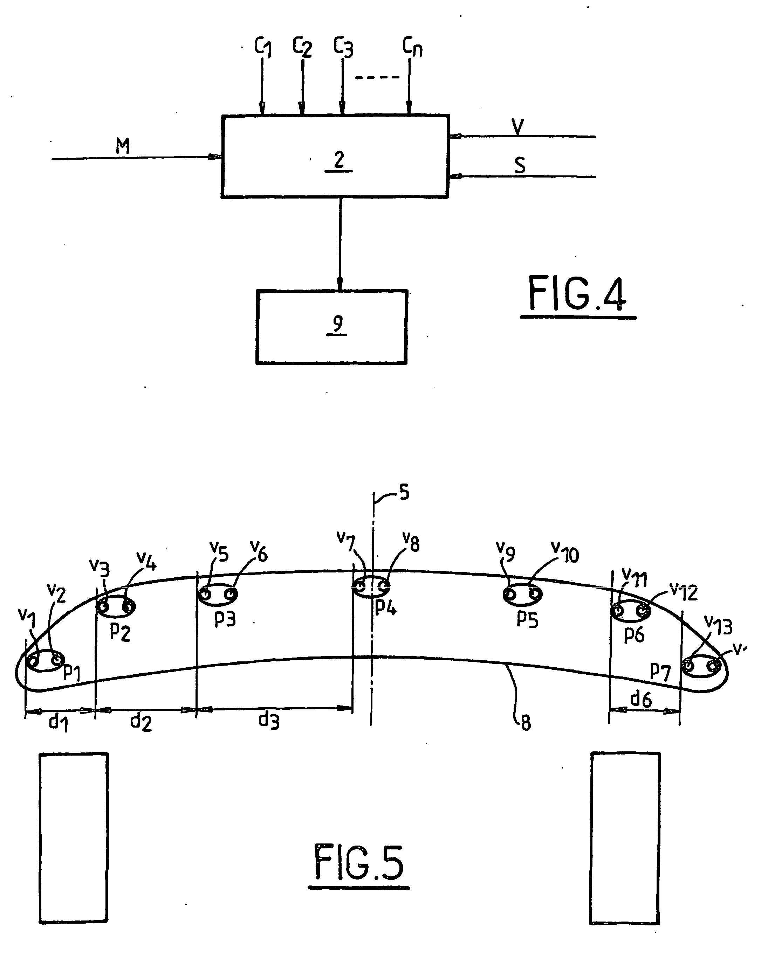

Le dispositif de détection d'une surface de roulement selon l'invention illustré notamment aux figures 2 et 4 comporte une pluralité de capteurs c1 à cn reliés à des moyens 2 de traitement de données tel qu'un calculateur.

Dans l'exemple de réalisation décrit ci-dessus, les capteurs sont montés sur un véhicule 1 et orientés vers la surface de roulement 4 pour détecter des modifications de cette dernière, et notamment des lignes de marquages au sol. Chaque capteur c1 à c8 a une surface ou point de visée au sol v1 à v8 respectif. Les moyens 2 de traitement de données sont constitués, par exemple, d'un calculateur d'un réseau multiplexé du véhicule 1.

Selon l'invention, le véhicule 1 comporte une pluralité de capteurs disposés relativement de façon qu'au moins une partie des points de visée au sol des capteurs sont associés en paires, les deux points de visée au sol de chaque paire étant espacés d'une première distance e déterminée. Par ailleurs, les capteurs sont disposés relativement de façon que les distances transversales séparant deux paires adjacentes de points de visée au sol sont croissantes de l'extérieur vers l'intérieur du véhicule 1 selon une direction sensiblement perpendiculaire à l'axe longitudinal 5 du véhicule.

En effet, de manière surprenante, un tel agencement des capteurs confère une qualité de détection améliorée par rapport aux systèmes de l'art antérieur. En particulier, on constate que l'invention permet une détection plus fiable et plus exhaustive d'une discontinuité dans la surface de roulement, et notamment d'une ligne d'un marquage au sol.

La figure 3 illustre un exemple de réalisation d'une paire de capteur c1, c2 espacés d'une distance e et ayant des axes de détection sensiblement parallèles. Chaque capteur c1, c2 comporte des moyens 10 d'émission d'ondes dans un domaine peu perturbé de la lumière et des moyens 11 de réception de ces ondes réfléchies. Par exemple, les capteurs c1, c2 opèrent dans le domaine infra-rouge. Les moyens 10 d'émission et de réception 11 des ondes sont par exemple reliés à des moyens 12 d'amplification délivrant à leur sortie 13 des données vers le calculateur 2 (figure 4).

Dans l'exemple de réalisation décrit à la figure 2, le véhicule comporte quatre paires p1 à p4 de capteurs c1 à c8. De préférence, les quatre paires p1 à p4 de capteurs c1 à c8 sont disposées de façon que leur points de visée au sol v1 à v8 soient associés en paires p1 à p4, les paires de points de visée au sol étant disposées de façon sensiblement symétrique par rapport à l'axe 5 longitudinal médian du véhicule. Les deux points de visée au sol d'une même paire sont espacés, par exemple, d'environ 5 à 20 cm, et de préférence 10 cm environ.

Par ailleurs, les deux paires adjacentes de capteurs p1, p2 ou p4, p3 situées d'un même côté du véhicule forment des paires de points de visée au sol distantes d'environ 15 à 50cm, et de préférence environ 24cm.

Dans une variante de réalisation avantageuse, la distance dn transversale en cm séparant deux paires pn, pn+1 adjacentes de points de visée au sol de capteurs est donnée par la formule $dn = K.R^n$, dans laquelle n est le numéro d'ordre de la paire pn de points de visée au sol vn en direction de l'axe 5 longitudinal, et R est un premier coefficient multiplicatif constant sensiblement égal à 1,2, et K un second coefficient constant égal à 20.

Comme précédemment, cette configuration confère une détection améliorée par rapport aux systèmes de l'art antérieur, tout en conciliant une simplicité de structure et un faible coût.

Dans une autre variante de réalisation avantageuse, le positionnement des capteurs cn peut être adapté notamment à la détection de lignes de marquage au sol discontinues (figure 1). Ainsi, la distance dn transversale en cm séparant deux paires pn, pn+1 adjacentes de points de visée au sol vn peut être donnée par la formule : $dn = (L2+e).(\frac{E+L1}{E+2c})^n$, de façon à détecter notamment une ligne de marquage au sol discontinue, et dans laquelle n est le numéro d'ordre de la paire pn de points de visée au sol vn vers l'intérieur du véhicule, L1 la longueur en cm d'un tiret 6 de la ligne discontinue, L2 la largeur en cm d'un tiret 6 de la ligne discontinue, E la distance en cm séparant deux tirets 6 consécutifs, e la distance en cm séparant les deux points de visée au sol d'une même paire pn, et c une constante déterminée en cm définissant une marge de sécurité de détection.

La marge de sécurité c de détection est choisie arbitrairement en fonction des applications envisagées et de la précision de détection souhaitée. La marge de sécurité c constitue la distance minimale de surveillance au sol par un capteur à partir de laquelle un changement peut être considéré comme un marquage potentiel. C'est-à-dire que la marge de sécurité c agit comme une distance formant un filtre, pour ne pas prendre en comptes de petits objets présents sur la surface 4 de roulement, tels que des papiers. La marge c de sécurité peut être fixée à une valeur comprise, par exemple, entre 0 et 50 cm, et de préférence 20 cm environ.

Cet agencement de capteurs selon l'invention permet une détection fiable des changements de surface 4 de roulement du véhicule 1 et est particulièrement bien adaptée à la détection d'un marquage 4 au sol discontinu.

En particulier, il a été constaté qu'un tel agencement permet une détection fiable et précoce d'une dérive d'un véhicule par rapport à sa trajectoire, notamment par rapport à une ligne discontinue de marquage au sol. En effet, lorsque le véhicule dérive de sa trajectoire avec un faible angle d'incidence et que la surface de roulement change (par exemple franchissement d'un marquage discontinu), les paires p1, pn de points de visée au sol vn situées le plus à l'extérieur du véhicule 1 détectent cet état. Une dérive avec un angle d'incidence légèrement supérieur est détectée par les paires p2, pn-1 de points de visée au sol vn suivantes et ainsi de suite.

C'est-à-dire qu'il est apparu que plus l'angle d'incidence du véhicule par rapport à une frontière (marquage discontinu ou autre changement de surface) est faible, plus la détection est réalisée par les capteurs orientés vers l'extérieur du véhicule. Cette détection par les capteurs dits "extérieurs" permet une détection précoce d'une éventuelle dérive du véhicule 1 par rapport à sa trajectoire.

Pour dimensionner le dispositif selon l'invention de façon qu'il détecte n'importe quel marquage au sol discontinu, c'est-à-dire que pour qu'il s'adapte aux différents marquages de différents pays, on peut utiliser la formule $dn = (L2+e).(\frac{E+L1}{E+2c})^n$

en fixant la valeur de largeur de tiret L2 à sa valeur la plus faible possible.

De même, on fixe le facteur $\frac{E+L1}{E+2c}$ à sa valeur la plus faible possible rencontrée en fonction des caractéristiques des marquages au sol connus.

Dans le cas des principaux pays européens, largeur de tiret L2 minimale est de l'ordre de 10 cm tandis que le facteur $(\frac{E+L1}{E+2s})$ est sensiblement égal à 1,2 (marge c de sécurité fixée à 20cm).

Ainsi, en séparant les deux points de visée au sol de chaque paire pn d'une distance d'environ 10cm, la distance dn transversale en cm séparant deux paires pn, pn+1 adjacentes de points de visée au sol peut être donnée par la formule : $dn = 20 \times 1,2^n$.

Le véhicule illustré à la figure 5 comprend sept paires p1 à p7 de capteurs disposées dans le bouclier 8 avant du véhicule, devant les roues 3 avant du véhicule, et conformément à la formule ci-dessus. Les quatorze capteurs sont symbolisés uniquement par leur points de visée au sol v1 à v14.

Ainsi, la distance d1 entre la première p1 et la seconde p2 paire de points de visée au sol est sensiblement égale à 24cm; la distance d2 entre la seconde

p2 et la troisième paire p3 de points de visée au sol est sensiblement égale à 29cm; et la distance d3 entre la troisième p3 et la quatrième p4 paire de points de visée au sol est sensiblement égale à 34,7cm.

La quatrième paire p4 de points de visée au sol v7, v8 est disposée au niveau de l'axe 5 longitudinal médian du véhicule. Les cinquième p5, sixième p6 et septième p7 paires de points de visée au sol v9 à v14 sont situées symétriquement de l'autre côté de l'axe 5 longitudinal médian du véhicule (d6=d1).

Selon l'invention, les capteurs peuvent être disposés de manière indifférente selon des directions parallèles à l'axe 5 longitudinal du véhicule. De préférence cependant, les capteurs c1 à cn sont disposés dans la partie avant du véhicule, de façon à détecter au plus tôt une variation dans la surface 4 de roulement. De même, les capteurs peuvent être disposés dans toute autre partie du véhicule, par exemple dans des rétroviseurs.

Par ailleurs, il est également possible d'envisager un agencement de capteurs comprenant aussi bien des points de visée au sol "simples" que par paires.

De plus, les capteurs infra-rouge peuvent être remplacés ou juxtaposés à des capteurs à ultrasons et/ou des capteurs vidéo ou tout autre élément équivalent.

Bien entendu, l'invention ne saurait se limiter aux exemples de réalisation décrits ci-dessus. Ainsi, on peut envisager un dispositif dans lequel des paires de points de visée au sol sont disposées d'un seul côté du véhicule, pour surveiller un changement de surface uniquement du côté concerné. De même, l'invention peut comporter plus de sept paires de points de visée au sol.

Par ailleurs, tout ou partie des capteurs peuvent être orientés latéralement vers l'extérieur du véhicule.

En particulier, les capteurs peuvent être inclinés vers l'avant ou vers l'arrière et/ou vers un côté du véhicule par rapport à la verticale.

De préférence, l'angle d'inclinaison des capteurs avec la verticale est sensiblement égal ou supérieur à leur demi-angle A de cône de vision 7. Le cône de vision 7 d'un capteur c1 est définit par la fenêtre angulaire de vision du capteur (figure 2).

De préférence les capteurs sont inclinés par rapport à la verticale avec un angle B compris entre 5 et 45 degrés environ et de préférence 15 degrés (figure 3).

L'orientation des capteurs définie ci-dessus associe une bonne qualité de détection du sol avec une précocité de la détection. En effet, on constate que la taille, la forme et la position obtenues des traces ou points de visée au sol émis par les capteurs améliorent la qualité de détection du système par rapport à l'art antérieur.

De préférence, la surface au sol visée par un capteur décrit une trace sensiblement elliptique ou circulaire et ayant un diamètre de l'ordre de 5 à 10 cm environ. Par ailleurs, les capteurs sont situés de préférence à une hauteur du sol comprise entre 15 et 1 m environ.

En se référant à la figure 4, le dispositif de détection peut être utilisé pour avertir le conducteur d'une éventuelle dérive de la trajectoire du véhicule. En fonction des informations relevées par les capteurs c1, cn, les moyens 2 de traitement de données peuvent activer des moyens 9 de sécurité tel que des moyens de signalisation vers l'extérieur (clignotant par exemple) ou des moyens d'alerte de l'utilisateur du véhicule (signal lumineux et/ou sonore et/ou tactile).

Avantageusement, l'activation ou non des moyens 9 de sécurité peut être conditionnée également à une information M représentative de la mise en marche ou non du système de détection (interrupteur par exemple), et/ou en fonction de la vitesse V du véhicule, et/ou en fonction d'un état S d'activation ou non des clignotants du véhicule.

C'est-à-dire que le système de surveillance et de sécurité peut comporter un interrupteur de commande de sa mise en marche ou de son arrêt et pouvant être actionné par l'utilisateur du véhicule.

On peut également envisager l'activation du dispositif de surveillance et d'alerte que lorsque la vitesse V du véhicule est supérieure à un seuil de l'ordre, par exemple, de 80km/h.

De préférence également, les moyens de traitement de données n'activent pas les moyens 9 de sécurité lorsqu'un franchissement est détecté quasi simultanément des deux côtés du véhicule. De cette façon, le franchissement normal d'une ligne transversale n'est pas signalé à l'utilisateur du véhicule.

De la même façon, les moyens d'alerte et de sécurité peuvent n'être activés que lorsque la détection d'une discontinuité anormale par un premier capteur est confirmée par au moins une seconde mesure réalisée par un capteur adjacent.

Enfin, bien que l'invention ait été décrite en liaison avec des modes de réalisation particuliers, elle comprend tous les équivalents techniques des moyens tels que définis par les revendications qui suivent.

**Revendications**

1. Dispositif de détection d'une surface de roulement pour véhicule, comportant une pluralité de capteurs (c1 à c8) destinés à être orientés vers la surface (4) de roulement pour déterminer des modifications de cette dernière, et des moyens (2) de traitement de données des informations relevées par les capteurs, **caractérisé en ce que** les capteurs sont disposés relativement de façon à associer au moins une partie de leur points de visée au sol (v1 à v8) en paires (p1 à p4), les deux points de visée au sol d'une paire étant espacés d'une première distance (e) déterminée, et **en ce que** les distances (d1 à d6) transversales séparant deux paires (p1 à p4) adjacentes de points de visée au sol (vn) sont croissantes en direction d'un axe (5) longitudinal selon une direction sensiblement perpendiculaire à cet axe (5).

2. Dispositif de détection selon la revendication 1, **caractérisé en ce qu'**il comporte au moins deux paires de capteurs.

3. Dispositif de détection selon la revendication 1 ou 2, **caractérisé en ce que** les capteurs sont disposés de part et d'autre d'un axe (5) longitudinal médian et **en ce que** les distances transversales (d1 à d6) séparant les paires (p1 à p7) de points de visée au sol (v1 à v14) adjacentes de capteurs sont sensiblement symétriques par rapport à l'axe (5) longitudinal médian.

4. Dispositif de détection selon l'une quelconque des revendications 1 à 3, **caractérisé en ce que** la distance dn transversale en cm séparant deux paires (pn, pn+1) adjacentes de points de visée au sol est donnée par la formule $dn = K.R^n$, dans laquelle n est le numéro d'ordre de la paire (pn) de points de visée au sol (vn) en direction de l'axe (5) longitudinal, R est un premier coefficient multiplicatif constant sensiblement égal à 1,2 et K un second coefficient constant égal à 20.

5. Disposif selon l'une quelconque des revendications 1 à 3, **caractérisé en ce qu'**il comprend sept paires (p1) à (p7) de capteurs la distance d1 entre la première (p1) et la seconde (p2) paire de points de visée au sol étant sensiblement égale à 24cm; la distance d2 entre la seconde (p2) et la troisième paire (p3) de points de visée au sol étant sensiblement égale à 29cm; la distance d3 entre la troisième (p3) et la quatrième (p4) paire de points de visée au sol étant sensiblement égale à 34,7cm,

   la quatrième paire (p4) de points de visée au sol v7, v8 étant disposée au niveau de l'axe (5) longitudinal les cinquième (p5), sixième (p6) et septième (p7) paires de points de visée au sol v9 à v14 étant situées symétriquement de l'autre côté de l'axe (5) longitudinal.

6. Dispositif de détection selon l'une quelconque des revendications 1 à 3, **caractérisé en ce que** la distance (dn) transversale en cm séparant deux paires (pn, pn+1) adjacentes de points de visée au sol de capteurs est donnée par la formule dn = (L2+e).$(\frac{E+L1}{E+2c})^n$, de façon à détecter notamment une ligne de marquage au sol discontinue, et dans laquelle n est le numéro d'ordre de la paire (pn) de points de visée au sol (vn) en direction de l'axe (5), L1 la longueur en cm d'un tiret (6) de la ligne discontinue, L2 la largeur en cm d'un tiret (6) de la ligne discontinue, E la distance en cm séparant deux tirets (6)

consécutifs, e la distance en cm séparant deux points de visée au sol d'une même paire (pn), et c une constante déterminée en cm définissant une marge de sécurité de détection.

7. Véhicule comportant un dispositif de détection selon l'une quelconque des revendications précédentes, les distances (d1 à d6) transversales séparant deux paires (p1 à p7) adjacentes de points de visée au sol (v1 à v14) étant croissantes de l'extérieur vers l'intérieur du véhicule (1) selon une direction sensiblement perpendiculaire à l'axe longitudinal (5) du véhicule.

8. Véhicule selon la revendication 7, **caractérisé en ce que** les capteurs (c1 à c14) sont disposées de part et d'autre de l'axe (5) longitudinal médian du véhicule, et **en ce que** les distances (d1 à d6) transversales séparant les paires (p1 à p7) de points de visée au sol (c1 à c14) sont sensiblement symétriques par rapport à l'axe (5) longitudinal médian.

9. Véhicule selon la revendication 7 ou 8, **caractérisé en ce que** les distances (dn) transversales en cm séparant deux paires (pn, pn+1) adjacentes de points de visée au sol sont données par la formule $dn = K.R^n$, dans laquelle n est le numéro d'ordre de la paire (pn) de points de visée au sol en direction de l'axe (5) longitudinal, R est un premier coefficient multiplicatif constant sensiblement égal à 1,2, et K un second coefficient ègal à 20.

10. Véhicule selon la revendication 7 ou 8, **caractérisé en ce que** les distances (dn) transversales en cm séparant deux paires (pn, pn+1) adjacentes de points de visée au sol sont données par la formule $dn = (L2+e).(\frac{E+L1}{E+2c})^n$, de façon à détecter notamment une ligne de marquage au sol discontinue, et dans laquelle n est le numéro d'ordre de la paire (pn) de points de visée au sol (vn) en direction de l'axe (5) longitudinal, L1 la longueur en cm d'un tiret (6) de la ligne discontinue, L2 la largeur en cm d'un tiret (6) de la ligne discontinue, E la distance en cm séparant deux tirets (6) consécutifs, e la distance en cm séparant deux capteurs d'une même paire (pn) de points de visée au sol, et c une constante déterminée en cm définissant une marge de sécurité de détection.

11. Véhicule selon l'une quelconque des revendications 7 à 10, **caractérisé en ce qu'**au moins une partie des capteurs (c1 à c14) sont inclinés par rapport à la verticale avec un angle sensiblement égal ou supérieur à leur demi-angle (A) de cône de vision (7).

12. Véhicule selon l'une quelconque des revendicattons 7 à 10, **caractérisé en ce qu'**au moins une partie des capteurs (c1 à c14) sont inclinés par rapport à la verticale avec un angle (B) compris entre 5 et 45 degrés environ.

13. Véhicule selon l'une quelconque des revendications 7 à 12, **caractérisé en ce qu'**au moins une partie des capteurs (c1, à c14) sont disposés dans le bouclier avant (8) du véhicule.

14. Véhicule selon l'une quelconque des revendications 7 à 13, **caractérisé en ce qu'**il comporte sept paires (p1 à p7) de capteurs (c1, à c14).

15. Véhicule selon la revendication 14, **caractérisé en ce qu'**il comprend sept paires (p1 à p7) de capteurs
    la distance d1 entre la première (p1) et la seconde (p2) paire de points de visée au sol étant sensiblement égale à 24cm; la distance d2 entre la seconde (p2) et la troisième paire (p3) de points de visée au sol étant sensiblement égale à 29cm; et la distance d3 entre la troisième (p3) et la quatrième (p4) paire de points de visée au sol étant sensiblement égale à 34,7cm,
    La quatrième paire (p4) de points de visée au sol v7, v8 étant disposée au niveau de l'axe (5) longitudinal médian du véhicule, les cinquième (p5), sixième (p6) et septième (p7) paires de points de visée au sol v9 à v14 étant situées symétriquement de l'autre côté de l'axe (5) longitudinal médian du véhicule.

16. Véhicule selon l'une quelconque des revendications 7 à 15, **caractérisé en ce que** la distance (e) séparant les deux points de visée au sol (vn) d'une même paire (pn) est comprise entre 5 et 25cm environ.

## Patentansprüche

1. Vorrichtung für ein Fahrzeug zum Erfassen einer Fahrbahnoberfläche mit mehreren Sensoren (c1 bis c8), die zur Fahrbahnoberfläche (4) gerichtet sind, um Veränderungen an dieser festzustellen, und mit einer Einrichtung (2) zum Verarbeiten der von den Sensoren gewonnenen Daten, **dadurch gekennzeichnet, dass** die Sensoren derart zueinander angeordnet sind, dass mindestens ein Teil ihrer Beobachtungspunkte auf dem Boden (v1 bis v8) in Paaren (p1 bis p4) angeordnet ist, wobei die beiden Beobachtungspunkte auf dem Boden eines Paars durch einen bestimmten ersten Abstand (e) voneinander getrennt sind, und **dadurch**, dass die Querabstände (d1 bis d6) zwischen zwei benachbarten Paaren (p1 bis p4) von Beobachtungspunkten auf dem Boden (vn) zu einer Längsachse (5) hin in einer Richtung zunehmen, die im Wesentlichen senkrecht zu dieser Achse (5) verläuft.

**2.** Erfassungsvorrichtung nach Anspruch 1, **dadurch gekennzeichnet, dass** sie mindestens zwei Sensorpaare umfasst.

**3.** Erfassungsvorrichtung nach Anspruch 1 oder 2, **dadurch gekennzeichnet, dass** die Sensoren auf beiden Seiten einer Längsmittelachse (5) angeordnet sind und dass die Querabstände (d1 bis d6) zwischen den benachbarten Paaren (p1 bis p7) an Beobachtungspunkten auf dem Boden (v1 bis v14) der Sensoren im Wesentlichen symmetrisch gegenüber der Längsmittelachse (5) sind.

**4.** Erfassungsvorrichtung nach einem der Ansprüche 1 bis 3, **dadurch gekennzeichnet, dass** der Querabstand dn in Zentimeter zwischen zwei benachbarten Paaren (pn, pn+1) von Beobachtungspunkten auf dem Boden durch die Formel dn = K.Rn gegeben ist, wobei n die laufende Nummer des Paars (pn) von Beobachtungspunkten auf dem Boden (vn) zur Längsachse (5) hin ist, R ein erster konstanter multiplikativer Koeffizient, der im Wesentlichen 1,2 entspricht, und K ein zweiter konstanter Koeffizient, der im Wesentlichen 20 entspricht.

**5.** Vorrichtung nach einem der Ansprüche 1 bis 3, **dadurch gekennzeichnet, dass** sie sieben Sensorpaare (p1) bis (p7) aufweist, wobei der Abstand d1 zwischen dem ersten Paar (p1) und dem zweiten Paar (p2) von Beobachtungspunkten auf dem Boden im Wesentlichen 24 Zentimeter entspricht, wobei der Abstand d2 zwischen dem zweiten Paar (p2) und dem dritten Paar (p3) von Beobachtungspunkten auf dem Boden im Wesentlichen 29 Zentimeter entspricht, wobei der Abstand d3 zwischen dem dritten Paar (p3) und dem vierten Paar (p4) von Beobachtungspunkten auf dem Boden im Wesentlichen 34,7 Zentimeter entspricht, wobei das vierte Paar (p4) von Beobachtungspunkten auf dem Boden (v7, v8) an der Längsachse (5) angeordnet ist, wobei das fünfte Paar (p5), das sechste Paar (p6) und das siebte Paar (p7) von Beobachtungspunkten auf dem Boden (v9 bis v14) symmetrisch auf der anderen Seite der Längsachse (5) angeordnet sind.

**6.** Erfassungsvorrichtung nach einem der Ansprüche 1 bis 3, **dadurch gekennzeichnet, dass** der Querabstand (dn) in Zentimeter zwischen zwei benachbarten Paaren (pn, pn+1) von Beobachtungspunkten auf dem Boden der Sensoren durch die Formel $dn=(L2+e)\cdot(\frac{E+L1}{E+2c})^n$ gegeben ist, sodass insbesondere eine unterbrochene Markierungslinie auf dem Boden erfasst wird, wobei n der laufenden Nummer des Paars (pn) von Beobachtungspunkten auf dem Boden (vn) zu einer Achse (5) hin entspricht, L1 der Länge in Zentimeter eines Strichs (6) der unterbrochenen Linie, L2 der Breite in Zentimeter eines Strichs (6) der unterbrochenen Linie, E dem Abstand in Zentimeter zwischen zwei aufeinander folgenden Strichen (6), e dem Abstand in Zentimeter zwischen zwei Beobachtungspunkten auf dem Boden eines Paars (pn) und c einer bestimmten Konstante in Zentimeter, die eine Sicherheitsspanne der Erfassung festlegt.

**7.** Fahrzeug mit einer Erfassungsvorrichtung nach einem der vorhergehenden Ansprüche, wobei die Querabstände (d1 bis d6) zwischen zwei benachbarten Paaren (p1 bis p7) von Beobachtungspunkten auf dem Boden (v1 bis v14) von der Außenseite zur Innenseite des Fahrzeugs (1) in einer Richtung zunehmen, die im Wesentlichen senkrecht zur Längsachse (5) des Fahrzeugs ist.

**8.** Fahrzeug nach Anspruch 7, **dadurch gekennzeichnet, dass** die Sensoren (c1 bis c14) auf beiden Seiten der Längsmittelachse (5) des Fahrzeugs angeordnet sind und dass die Querabstände (d1 bis d6) zwischen den Paaren (p1 bis p7) von Beobachtungspunkten auf dem Boden (c1 bis c14) im Wesentlichen symmetrisch gegenüber der Längsmittelachse (5) sind.

**9.** Fahrzeug nach Anspruch 7 oder 8, **dadurch gekennzeichnet, dass** die Querabstände (dn) in Zentimeter zwischen zwei benachbarten Paaren (pn, pn+1) von Beobachtungspunkten auf dem Boden durch die Formel $dn = K.R^n$ bestimmt sind, wobei n die laufende Nummer des Paars (pn) von Beobachtungspunkten auf dem Boden zur Längsachse (5) hin ist, R ein erster konstanter multiplikativer Koeffizient, der im Wesentlichen 1,2 entspricht, und K ein zweiter Koeffizient, der im Wesentlichen 20 entspricht.

**10.** Fahrzeug nach Anspruch 7 oder 8, **dadurch gekennzeichnet, dass** die Querabstände (dn) in Zentimeter zwischen zwei benachbarten Paaren (pn, pn+1) von Beobachtungspunkten auf dem Boden durch die Formel $dn=(L2+e)\cdot(\frac{E+L1}{E+2c})^n$ bestimmt sind, sodass insbesondere eine unterbrochene Markierungslinie auf dem Boden erfasst wird, wobei n der laufenden Nummer des Paars (pn) von Beobachtungspunkten auf dem Boden (vn) zur Längsachse (5) hin entspricht, L1 der Länge in Zentimeter eines Strichs (6) der unterbrochenen Linie, L2 der Breite in Zentimeter eines Strichs (6) der unterbrochenen Linie, E dem Abstand in Zentimeter zwischen zwei aufeinander folgenden Strichen (6), e dem Abstand in Zentimeter zwischen zwei Sensoren eines Paars (pn) von Beobachtungspunkten auf dem Boden und c einer bestimmten Konstante in Zentimeter, die eine Sicherheitsspanne der Erfassung festlegt.

**11.** Fahrzeug nach einem der Ansprüche 7 bis 10, **da-**

**durch gekennzeichnet, dass** mindestens ein Teil der Sensoren (c1 bis c14) gegenüber der Vertikalen um einen Winkel geneigt ist, der im Wesentlichen dem Halbwinkel (A) des Sichtkegels (7) entspricht oder größer ist als dieser.

12. Fahrzeug nach einem der Ansprüche 7 bis 10, **dadurch gekennzeichnet, dass** mindestens ein Teil der Sensoren (c1 bis c14) gegenüber der Vertikalen um einen Winkel (B) zwischen ungefähr 5 und 45 Grad geneigt ist.

13. Fahrzeug nach einem der Ansprüche 7 bis 12, **dadurch gekennzeichnet, dass** mindestens ein Teil der Sensoren (c1 bis c14) im vorderen Schild (8) des Fahrzeugs angeordnet ist.

14. Fahrzeug nach einem der Ansprüche 7 bis 13, **dadurch gekennzeichnet, dass** es sieben Paare (p1 bis p7) von Sensoren (c1 bis c14) aufweist.

15. Fahrzeug nach Anspruch 14, **dadurch gekennzeichnet, dass** es sieben Paare (p1 bis p7) von Sensoren aufweist, wobei der Abstand d 1 zwischen dem ersten Paar (p1) und dem zweiten Paar (p2) von Beobachtungspunkten auf dem Boden im Wesentlichen 24 Zentimeter entspricht, wobei der Abstand d2 zwischen dem zweiten Paar (p2) und dem dritten Paar (p3) von Beobachtungspunkten auf dem Boden im Wesentlichen 29 Zentimeter entspricht, wobei der Abstand d3 zwischen dem dritten Paar (p3) und dem vierten Paar (p4) von Beobachtungspunkten auf dem Boden im Wesentlichen 34,7 Zentimeter entspricht, wobei das vierte Paar (p4) von Beobachtungspunkten auf dem Boden (v7, v8) an der Längsmittelachse (5) des Fahrzeugs angeordnet ist, wobei das fünfte Paar (p5), das sechste Paar (p6) und das siebte Paar (p7) von Beobachtungspunkten auf dem Boden (v9 bis v14) symmetrisch auf der anderen Seite der Längsmittelachse (5) des Fahrzeugs angeordnet ist.

16. Fahrzeug nach einem der Ansprüche 7 bis 15, **dadurch gekennzeichnet, dass** der Abstand (e) zwischen den beiden Beobachtungspunkten auf dem Boden (vn) eines Paars (pn) zwischen ungefähr 5 und 25 Zentimeter beträgt.

## Claims

1. Device for detection of a running surface for a vehicle, comprising a plurality of sensors (c1 to c8) intended to be oriented towards the running surface (4) in order to detect modifications of the latter, and means (2) for data-processing the information recorded by the sensors, **characterised in that** the sensors are arranged relative to each other so as to associate at least some of their aim points on the ground (v1 to v8) in pairs (p1 to p4), the two aim points of a pair being spaced apart by a first predetermined distance (e), and **in that** the transverse distances (d1 to d6) separating two adjacent pairs (p1 to p4) of aim points on the ground (vn) increase in the direction of a longitudinal axis (5) in a direction substantially perpendicular to this axis (5).

2. Detection device according to Claim 1, **characterised in that** it comprises at least two pairs of sensors.

3. Detection device according to Claim 1 or 2, **characterised in that** the sensors are arranged on either side of a median longitudinal axis (5) and **in that** the transverse distances (d1 to d6) separating the adjacent pairs (p1 to p7) of aim points on the ground (v1 to v14) of sensors are substantially symmetrical relative to the median longitudinal axis (5).

4. Detection device according to any one of Claims 1 to 3, **characterised in that** the transverse distance dn in cm separating two adjacent pairs (pn, pn+1) of aim points on the ground is given by the formula $dn = K \cdot R^n$, in which n is the serial number of the pair (pn) of aim points on the ground (vn) in the direction of the longitudinal axis (5), R is a first constant multiplication coefficient substantially equal to 1.2, and K is a second constant coefficient equal to 20.

5. Device according to any one of Claims 1 to 3, **characterised in that** it comprises seven pairs (p1) to (p7) of sensors, the distance d1 between the first (p1) and the second (p2) pair of aim points on the ground being substantially equal to 24 cm; the distance d2 between the second (p2) and the third (p3) pair of aim points on the ground being substantially equal to 29 cm; the distance d3 between the third (p3) and the fourth (p4) pair of aim points on the ground being substantially equal to 34.7 cm, the fourth pair (p4) of aim points on the ground v7, v8 being arranged at the level of the longitudinal axis (5), the fifth (p5), sixth (p6), and seventh (p7) pairs of aim points on the ground v9 to v14 being situated symmetrically on the other side of the longitudinal axis (5).

6. Detection device according to any one of Claims 1 to 3, **characterised in that** the transverse distance (dn) in cm separating two adjacent pairs (pn, pn+1) of aim points on the ground of sensors is given by the formula $dn = (L2+e) \cdot (\frac{E+L1}{F+2c})^n$, so as to detect in particular a broken line of marking on the ground, and in which n is the serial number of the pair (pn) of aim points on the ground (vn) in the direction of the axis (5), L1 the length in cm of a dash (6) of the broken line, L2 the width in cm of a dash of the broken line, E the distance in cm separating two consecutive dashes (6), e the distance in cm separating two aim points on the ground of any one pair (pn), and c a predetermined constant in cm defining a detection safety margin.

7. Vehicle comprising a detection device according to any one of the preceding claims, the transverse distances (d1 to d6) separating two adjacent pairs (p1 to p7) of aim points on the ground (v1 to v14) increasing from the outside towards the inside of the vehicle (1) in a direction substantially perpendicular to the longitudinal axis (5) of the vehicle.

8. Vehicle according to Claim 7, **characterised in that** the sensors (c1 to c14) are arranged on either side of the median longitudinal axis (5) of the vehicle, and **in that** the transverse distances (d1 to d6) separating the pairs (p1 to p7) of aim points on the ground (c1 to c14) are substantially symmetrical relative to the median longitudinal axis (5).

9. Vehicle according to Claim 7 or 8, **characterised in that** the transverse distances (dn) in cm separating two adjacent pairs (pn, pn+1) of aim points on the ground are given by the formula $dn = K \cdot R^n$, in which n is the serial number of the pair (pn) of aim points on the ground in the direction of the longitudinal axis (5), R is a first constant multiplication coefficient substantially equal to 1.2, and K is a second constant coefficient equal to 20.

10. Vehicle according to Claim 7 or 8, **characterised in that** the transverse distances (dn) in cm separating two adjacent pairs (pn, pn+1) of aim points on the ground are given by the formula $dn = (L2+e) \cdot (\frac{E+L1}{E+2c})^n$, so as to detect in particular a broken line of marking on the ground, and in which n is the serial number of the pair (pn) of aim points on the ground (vn) in the direction of the longitudinal axis (5), L1 the length in cm of a dash (6) of the broken line, L2 the width in cm of a dash of the broken line, E the distance in cm separating two consecutive dashes (6), e the distance in cm separating two sensors of any one pair (pn) of aim points on the ground, and c a predetermined constant in cm defining a detection safety margin.

11. Vehicle according to any one of Claims 7 to 10, **characterised in that** at least some of the sensors (c1 to c14) are tilted with respect to the vertical at an angle substantially equal to or greater than the half-angle (A) of their cone of vision (7).

12. Vehicle according to any one of Claims 7 to 10, **characterised in that** at least some of the sensors (c1 to c14) are tilted with respect to the vertical at an angle (B) comprised between approximately 5 and 45 degrees.

13. Vehicle according to any one of Claims 7 to 12, **characterised in that** at least some of the sensors (c1 to c14) are arranged in the front shield (8) of the vehicle.

14. Vehicle according to any one of Claims 7 to 13, **characterised in that** it comprises seven pairs (p1 to p7) of sensors (c1 to c14).

15. Vehicle according to Claim 14, **characterised in that** it comprises seven pairs (p1) to (p7) of sensors, the distance d1 between the first (p1) and the second (p2) pair of aim points on the ground being substantially equal to 24 cm; the distance d2 between the second (p2) and the third (p3) pair of aim points on the ground being substantially equal to 29 cm; and the distance d3 between the third (p3) and the fourth (p4) pair of aim points on the ground being substantially equal to 34.7 cm, the fourth pair (p4) of aim points on the ground v7, v8 being arranged at the level of the median longitudinal axis (5) of the vehicle, the fifth (p5), sixth (p6), and seventh (p7) pairs of aim points on the ground v9 to v14 being situated symmetrically on the other side of the median longitudinal axis (5) of the vehicle.

16. Vehicle according to any one of Claims 7 to 15, **characterised in that** the distance (e) separating the two aim points on the ground (vn) of any one pair (pn) is comprised between approximately 5 and 25 cm.

FIG.1

FIG.2

FIG.3

FIG.4

FIG.5